**Europäisches Patentamt**

**European Patent Office**

**Office européen des brevets**

(11) Numéro de publication : **0 488 913 A1**

## (12) DEMANDE DE BREVET EUROPEEN

(21) Numéro de dépôt : **91420418.5**

(22) Date de dépôt : **26.11.91**

(51) Int. Cl.⁵ : **F16C 13/00,** D03C 3/42

(30) Priorité : **27.11.90 FR 9015138**

(43) Date de publication de la demande :
**03.06.92 Bulletin 92/23**

(84) Etats contractants désignés :
**BE CH DE ES FR GB IT LI**

(71) Demandeur : **STAUBLI-VERDOL S.A.R.L.**
**31, rue des Frères Lumière**
**F-69680 Chassieu (FR)**

(72) Inventeur : **Bassi, Dario**
**Chemin des Sables**
**F-69970 Chaponnay (FR)**
Inventeur : **Palau, Joseph**
**Les Perris**
**F-74410 Duingt (FR)**

(74) Mandataire : **Karmin, Roger**
**Cabinet MONNIER 150, cours Lafayette BP**
**3058**
**F-69393 Lyon Cédex 03 (FR)**

(54) **Perfectionnements aux moufles utilisés notamment dans les mécaniques d'armure.**

(57)    La poulie (3) comporte un chambrage central (32) à plusieurs diamètres formant d'une part un alésage central (33) dont le débouché sur l'une des faces latérales de la poulie (3) comporte des saillies (34) orientées vers le centre et d'autre part un compartiment (35) adjacent audit alésage à l'opposé à son débouché, et dont le fond est percé d'un trou (36). Dans l'alésage (33) de la poulie (3) est disposé un roulement à billes comprenant une fourrure en deux demi-coquilles (10, 11) et une cage extérieure (7) constituée par une bague (70) s'encliquetant dans l'alésage (33) de la poulie (3) la face intérieure de cette bague comportant une gorge (71) pour les billes (9) et par une cuvette 72 dont le fond est percé d'un trou (73) chacune des joues (1, 2) comprend un bossage (12, 22) traversant les trous (36, 73) pour venir en appui contre les demi-coquilles (10, 11). Le bossage 22 comporte un embout (24) qui s'engage dans l'alésage (13) de l'autre bossage (12) afin d'être assemblé avec lui par soudure HF.

*Fig. 2*

Les poulies des moufles ou palonniers des mécaniques d'armure sont soumises à des rotations nombreuses à des vitesses angulaires élevées, si bien qu'il faut prévoir leur structure de manière que l'usure soit minimale pour une période de temps importante. Etant donné que les poulies en question sont réalisées en matière plastique pour gagner du poids, il est difficile d'éviter l'usure en question, même en prévoyant un graissage incorporé.

Les perfectionnements qui font l'objet de la présente invention visent à remédier à cet inconvénient et à permettre la réalisation d'un moufle dont les poulies puissent être, malgré leur petite taille, reliées à leur axe fixe au moyen d'un roulement à billes.

A cet effet, le moufle suivant l'invention est caractérisé en ce que chaque poulie comporte un chambrage central à plusieurs diamètres formant d'une part un alésage axial dont le débouché sur l'une des faces latérales de la poulie comporte un pourtour muni de saillies orientées vers le centre, et d'autre part un compartiment adjacent audit alésage à l'opposé de son débouché et dont le fond est percé d'un trou, en ce que dans l'alésage de la poulie et disposé un roulement à billes comprenant d'une part une fourrure en deux demi-coquilles dont les bords adjacents déterminent une piste pour des billes, d'autre part une bague extérieure constituée par un manchon s'encliquetant dans l'alésage de la poulie et dont la face intérieure comporte une gorge pour les billes et par une cuvette dont le fond est percé d'un trou et qui est accolée à l'une des faces dudit manchon, chacune des joues de la chape comportant un bossage traversant les trous respectifs du fond du compartiment de la poulie et de la cuvette pour venir en appui contre les deux demi-coquilles, l'un des bossages ayant un embout qui pénètre dans une perforation de l'autre bossage afin d'être assemblé à lui par soudure.

Le dessin annexé, donné à titre d'exemple, permettra de mieux comprendre l'invention, les caractéristiques qu'elle présente et les avantages qu'elle est susceptible de procurer :

Fig. 1 est une vue en élévation d'un moufle ou palonnier réalisé conformément à l'invention.

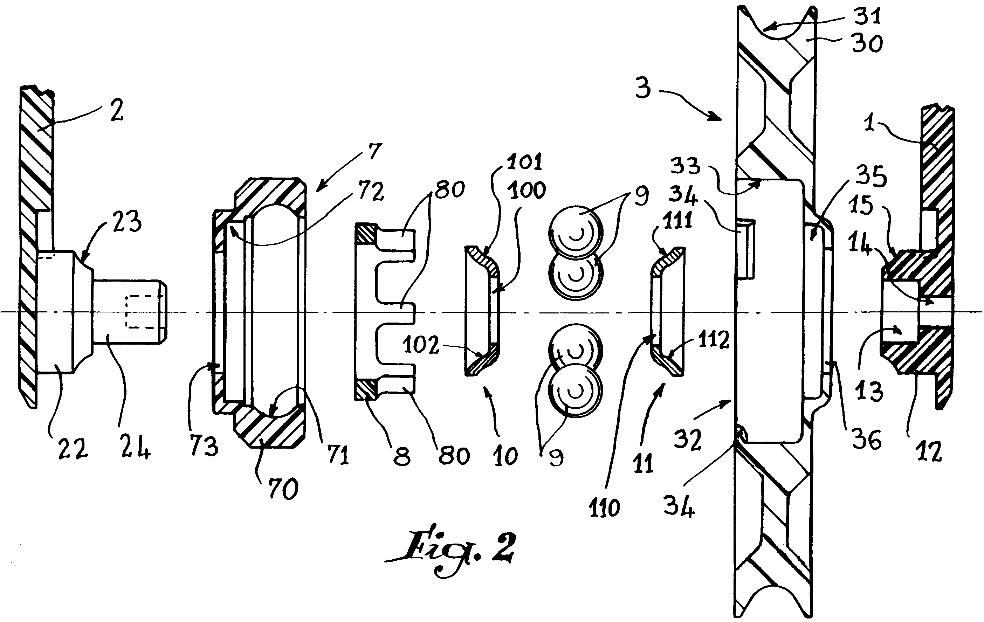

Fig. 2 est une vue éclatée en coupe des différents éléments de l'une des poulies et des joues d'un moufle suivant l'invention.

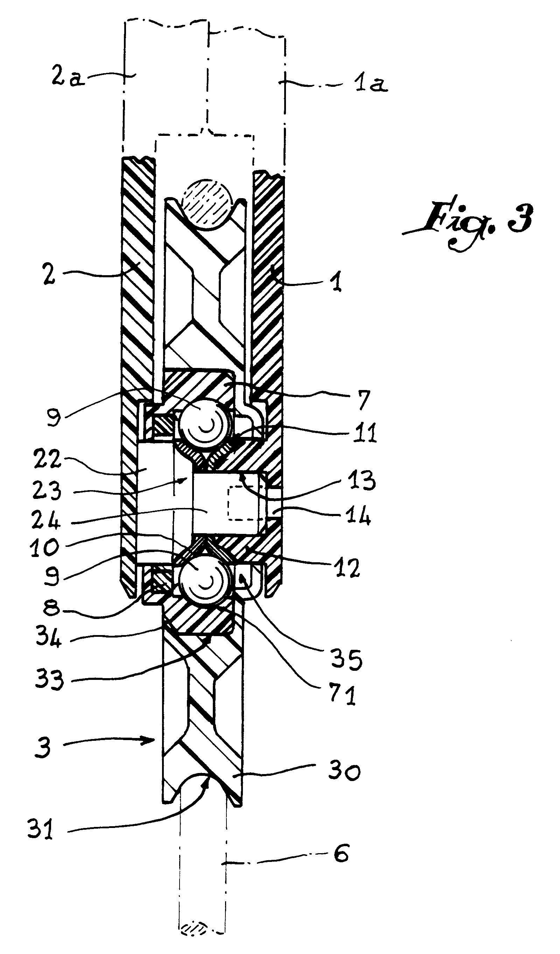

Fig. 3 est une coupe partielle d'un moufle établi conformément à l'invention.

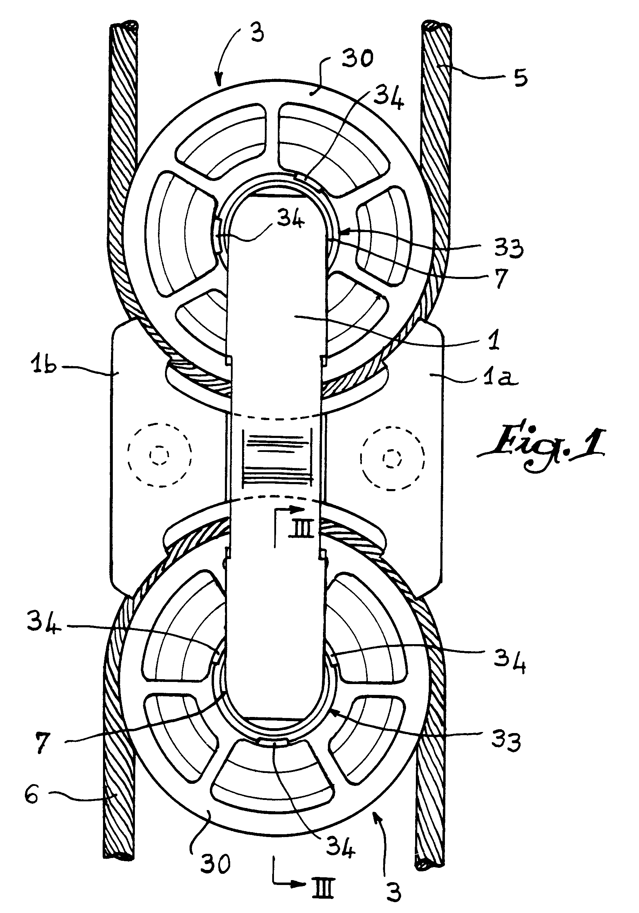

Comme illustré en fig. 1, un moufle suivant l'invention, appelé encore palonnier dans le domaine des machines textiles, comprend tout d'abord deux joues 1, 2 entre lesquelles sont placées deux poulies 3, qui coopèrent chacune avec un cordon 5, 6. On observe que chacune des joues comportent deux ailes 1a, 1b respectivement 2a, 2b qui constituent des guides pour les deux cordons 5 et 6.

Chacune des poulies 3 comprend une jante périphérique 30 creusée d'une gorge 31 dans laquelle passe le cordon correspondant 6. Le centre de la poulie comprend un chambrage central 32 à plusieurs diamètres formant d'une part un alésage axial 33 dont le débouché sur la face correspondante de la poulie est pourvue de trois saillies 34 orientées vers le centre et dont le rôle sera mieux expliqué plus loin. De manière adjacente à l'alésage axial 33, le centre de la poulie comprend encore un compartiment 35 présentant un diamètre inférieur à celui dudit alésage. Ce compartiment fait saillie sur la face latérale de la poulie 3 opposée à celle sur laquelle débouche l'alésage 33, le fond de ce compartiment étant pourvu d'un trou 36.

Dans l'alésage 33 de chaque poulie 3, on insère un roulement à billes qui comprend tout d'abord une bague 7 constituée par un manchon 70 propre à s'engager dans l'alésage 33 en s'encliquetant sous les saillies 34, la face intérieure de ce manchon étant creusée d'une gorge arrondie 71. La bague 7 comprend encore une cuvette 72 prolongeant axialement le manchon 70 sur l'une des faces de ce dernier et dont le fond est percé d'un trou 73.

Le roulement comporte encore une cage à billes 8 dont la couronne s'engage dans la cuvette 72 tandis que ses doigts 80 viennent se placer entre des billes 9 coopérant d'une part avec la gorge 71 de la bague 7 et d'autre part avec une fourrure tubulaire en acier réalisée en deux demi-coquilles 10, 11. Les demi-coquilles sont constituées chacune sous la forme d'une cuvette percée en son centre d'une ouverture 100 respectivement 110, tandis que sa périphérie est constituée sous la forme d'un bord 101, respectivement 111 réalisé de manière qu'une fois les deux demi-coquilles plaquées l'une contre l'autre, elles constituent une fourrure pourvue d'une piste intérieure pour les billes 9.

Chacune des extrémités de la joue 1 comprend un bossage 12 percé d'une perforation étagée formant deux alésages référencés respectivement 13, 14. On observe que l'extrémité libre du bossage 12 comporte une arête arrondie concave 15 dont le rayon correspond à celui de la partie extérieure 102, 112 du bord 101 ou 111 des demi-coquilles 10, 11.

La joue 2 quant à elle comporte un bossage 22 identique à celui 12 de la joue 1, c'est-à-dire que son arête libre est pourvue d'un congé 23 concave de même rayon que celui de la face externe des bords 101, respectivement 111 des demi-coquilles 10, 11. De plus, le bossage 22 comporte un prolongement réalisé sous la forme d'un embout 24.

On a illustré en fig, 3 le montage d'une poulie 3 entre les deux flasques 2 et 3. On observe que l'embout 24 du bossage 22 de la joue 2 traverse la bague 7 et coopère étroitement avec les perforations 100 et 110 des demi-coquilles 10 et 11 pour venir s'engager à jeu réduit dans l'alésage 13 du bossage 12 de la joue 1. Dans ces conditions, on observe que les deux demi-coquilles sont appliquées l'une contre l'autre par appui des congés 23 et 15 des joues 2 et 1 sur les faces extérieures 102, 112 de leur bord 101, 111. Il est à noter que le diamètre des bossages 22 et 12 correspond à celui des trous 73 et 36 respectivement de la bague 7 et de la poulie 3. De cette manière, on constitue entre la cuvette 72 et le compartiment 35 de la poulie 3 une chambre relativement étanche dans laquelle, au montage, on dispose de la graisse destinée à lubrifier le roulement à billes.

La dernière opération consiste à placer les deux joues montées avec le roulement entre les mâchoires d'une machine à ultra-sons qui permet une fusion partielle de l'embout 24 et du bossage 12 afin de réaliser l'assemblage définitif, les joues 1 et 2 étant bien entendu réalisées en une matière plastique propre à subir le traitement de fusion considéré. On note que la matière en fusion peut, si elle est excédentaire, se déposer dans l'alésage 14. De manière avantageuse, la poulie 3 et la bague 7 sont également réalisées en matière plastique, tandis que la cage 8 des billes 9 et les deux demi-coquilles 10 et 11 sont réalisées en acier.

La seconde poulie du moufle est montée rigoureusement de même manière.

Il va de soi que la soudure de l'embout 24 et du bossage 12 peut être réalisée par tout moyen approprié autre que la soudure par ultra-sons.

## Revendications

1. Moufle pourvu d'au moins une poulie (3) tournant librement autour d'un axe fixe par rapport aux joues de sa chape, caractérisé en ce que chaque poulie (3) comporte un chambrage central (32) à plusieurs diamètres formant d'une part un alésage axial (33) dont le débouché sur l'une des faces latérales de la poulie (3) comporte des saillies (34) orientées vers le centre et d'autre part un compartiment (35) adjacent audit alésage à l'opposé à son débouché et dont le fond est percé d'un trou (36), en ce que dans l'alésage (33) de la poulie (3) est disposé un roulement à billes comprenant d'une part une fourrure intérieure en deux demi-coquilles (10, 11) dont les bords adjacents déterminent une piste pour des billes (9), d'autre part une bague extérieure (7) constituée par un manchon (70) s'encliquetant dans l'alésage (33) de la poulie (3) et dont la face intérieure comporte une gorge (71) pour les billes (9) et par une cuvette (72) dont le fond est percé d'un trou (73), chacune des joues (1, 2) de la chape comportant un bossage (12, 22) traversant les trous respectifs (36, 73) du fond du compartiment (35) de la poulie et de la cuvette (72) pour venir en appui contre les deux demi-coquilles (10, 11), l'un (22) des bossages ayant un embout (24) qui pénètre dans un alésage (13) de l'autre bossage (12) afin d'être assemblé à lui par exemple par soudure à ultra-sons.

2. Moufle suivant la revendication 1, caractérisé en ce que les bossages (12, 22) des joues (1, 2) comportent chacun un congé (15, 23) qui appliquent les deux demi-coquilles (10, 11) l'une contre l'autre.

3. Moufle suivant la revendication 1, caractérisé en ce qu'une cage à billes (8) est disposée entre la fourrure tubulaire (10-11) et la bague (7).

*Fig.1*

Fig. 2

*Fig. 3*

Office européen
des brevets

**RAPPORT DE RECHERCHE EUROPEENNE**

Numero de la demande

EP 91 42 0418

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-B-2 939 714 (CARL ZANGS AG)<br>* figure 3 *<br>--- | 1 | F16C13/00<br>D03C3/42 |
| A | MACHINE DESIGN.<br>vol. 56, no. 4, 1984, CLEVELAND US<br>pages 52 - 56;<br>MYRON SENECZKO: 'cutting costs with unground ball bearings'<br>--- | 1 | |
| A | FR-A-1 175 133 (PREVOST & CIE)<br>* figures *<br>--- | 1 | |
| A | EP-A-0 241 968 (NUOVOPIGNONE)<br>--- | 1 | |
| A | US-A-1 782 622 (KILIAN)<br>* figures *<br><br>----- | 1 | |

**DOMAINES TECHNIQUES RECHERCHES (Int. Cl.5)**

F16C
D03C

Le présent rapport a été établi pour toutes les revendications

| Lieu de la recherche | Date d'achèvement de la recherche | Examinateur |
|---|---|---|
| LA HAYE | 05 FEVRIER 1992 | REBIERE J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................
& : membre de la même famille, document correspondant

EPO FORM 1503 03.82 (P0402)